# FASCICULE DE BREVET EUROPEEN

(11) **EP 3 545 566 B1**
(45) Date de publication et mention de la délivrance du brevet: **02.12.2020**
(21) Numéro de dépôt: 17803932.7
(22) Date de dépôt: 22.11.2017
(51) Int. Cl.: H01M 2/10, H01M 8/18, H01M 8/24, H01M 8/0273

(54) **CELLULE ÉLECTROCHIMIQUE RÉDOX EN FLUX À SHUNT RÉDUIT**
ELEKTROCHEMISCHE REDOX-FLOW-ZELLE MIT VERRINGERTEM NEBENSCHLUSS
REDOX-FLOW ELECTROCHEMICAL CELL WITH DECREASED SHUNT

(30) Priorité: 28.11.2016 FR 1661570
(43) Date de publication de la demande: 02.10.2019
(73) Titulaire: Kemiwatt, 35708 Rennes (FR)
(72) Inventeur: BEILLE, Florent, 35700 Rennes (FR); ALLIX, Jérémy, 35000 RENNES (FR)
(74) Mandataire: Lavoix
(86) Numéro de dépôt international: PCT/EP2017/080118
(87) Numéro de publication internationale: WO 2018/095995

(56) Documents cités:
- US-A- 4 371 433
- US-A1- 2010 003 545
- US-A1- 2013 302 710
- US-B1- 8 137 831

## Description

### Domaine de l'invention

La présente invention concerne le domaine des cellules électrochimiques comprenant des électrodes séparées d'une membrane. L'invention concerne en particulier des cellules électrochimiques rédox en flux. La présente invention concerne également un empilement de cellules électrochimiques, un procédé de fabrication de cellules électrochimiques, ainsi qu'une méthode de production de courant.

### Art antérieur

Dans le domaine de l'invention, un empilement, ou plus communément pour l'homme du métier un « stack » (en anglais), désigne un empilement de cellules électrochimiques comprenant typiquement l'empilement d'au moins deux électrodes de cellule électrochimique en général maintenues en compression l'une avec l'autre, et séparées entre elles par une membrane perméable d'échange d'ions, d'au moins deux cadres, chacun assurant le logement d'une électrode d'une cellule électrochimique et assurant l'étanchéité, l'alimentation et la répartition en fluides électrochimiques dans la cellule électrochimique. Le stack comprend également deux plaques collectrices assurant l'alimentation et la collecte du courant électrique.

Les cadres de l'empilement doivent assurer l'étanchéité. Cette étanchéité est classiquement réalisée par des joints logés dans des logements des cadres dédiés à cet effet. Les cadres assurent également l'alimentation fluidique des cellules à l'aide de canaux. Cette alimentation en flux électrochimique ce doit être le plus homogène possible afin de d'assurer une homogénéité planaire de fonctionnement la plus importante possible.

En général, les cellules électrochimiques comprenant une membrane d'échange d'ions sont séparées de manière étanche en deux zones l'une constituant un compartiment d'anode et l'autre un compartiment de cathode séparée par la membrane d'échange d'ions. L'étanchéité interne de la cellule électrochimique est un enjeu essentiel pour le bon fonctionnement de la cellule.

Un stack présente en général un écoulement de fluide électrochimique en parallèle et un empilement électrique de cellules électrochimiques en série. Pour les cellules connectées en série, un phénomène de courant de shunt peut apparaître. Ce courant de shunt est dû à une circulation électrique le long des fluides électrochimiques, en particulier comportant des électrolytes du fait que les cellules soient reliées fluidiquement en parallèle. Ainsi, le courant circulera le long des courants fluidiques plutôt qu'à travers les cellules électrochimiques, provoquant une perte d'efficacité.

A ce jour, les acteurs de ce domaine technique proposée différente solutions en développant sa propre technologie permettant de répondre au mieux à ses propres contraintes, mais sans chercher à fournir une cellule électrochimique présentant à la fois une bonne étanchéité fluide, une distribution homogène des électrolytes, et une diminution du courant de shunt.

Il existe notamment le brevet US 8 137 831 qui concerne des batteries en flux, mais la configuration très spécifique de ce brevet qui implique l'utilisation d'électrolytes du type métal-halogénure et envisage de limiter le courant de shunt en forçant le flux d'électrolytes à passer au travers de l'électrode poreuse. Dans cette configuration, le flux d'électrolyte alimente la surface supérieure de l'électrode poreuse et n'enseigne pas comment résoudre les problèmes techniques posés par la présente invention. L'alimentation du fluide électrochimique est assurée dans ce brevet par deux canaux, l'un principale, l'autre formant by-pass.

Dans un stack de cellules rédox en flux où les cellules sont fluidiquement en parallèle et donc toutes connectées entre elles par les électrolytes, si rien n'est prévu, la différence de potentiel entre les cellules combinée à des électrolytes conductrices conduit à la formation de courants de shunt entre cellules qui d'une part réduit le rendement du stack et d'autre part conduit à des réactions indésirables comme l'électrolyse de l'eau plutôt que la réaction d'oxydo-réduction visée. Une solution simple pourrait consister à isoler électriquement les zones conductrices en contact avec les électrolytes en dehors de la surface active. S'il est aisé d'isoler une surface donnée des plaques collectrices par exemple au moyen de film polymères isolant ou au moyen d'un revêtement ou peinture isolante, il est plus difficile d'isoler la tranche des plaques collectrices qui font typiquement de 0,5 à 1 mm d'épaisseur. D'autre part, l'ajout d'un film isolant ou d'un revêtement non conducteur ajoute un surcoût à la production de la cellule et peut poser le problème de durée de vie dans le cas d'un revêtement. On peut citer à titre d'exemple le brevet US 4 371 433. De plus, isoler électriquement les zones conductrices ne suffit pas à limiter suffisamment le courant de shunt.

Il est également envisagé par la demande de brevet US 2015/0180074 d'allonger le chemin fluidique par un canal en forme de

US20100003545 décrit un empilement de cellules électrochimiques redox en flux, chaque cellule comprenant des électrodes poreuses en contact avec une membrane et un cadre, ledit cadre étant caractérisé en ce que il comprend une partie proximale proche de la membrane, et une partie distale distante de la membrane: le cadre est connecté avec un canal alimentation d'un fluide électrochimique et avec un canal d'entrée d'un fluide alimentant une face latérale de l'électrode, le canal d'entrée comprenant un orifice débouchant sur une face latérale de l'électrode. Le cadre est connecté avec un canal d'évacuation d'un fluide électrochimique et un canal de sortie du fluide par une face latérale de l'électrode, ledit canal de sortie comprenant un orifice débouchant sur une face latérale de l'électrode. Le canal d'entrée et le canal de sortie comprennent un orifice d'entrée, respectivement de sortie, débouchant sur un canal d'alimentation, respectivement d'évacuation, lesdits orifices étant situés entre la partie proximale et distale du cadre.

### Objectifs de l'invention

La présente invention a pour but de fournir une cellule électrochimique permettant de réduire les courants de shunt, en particulier dans des cellules électrochimiques montées fluidiquement en parallèle.

La présente invention a pour but de fournir une cellule électrochimique présentant une bonne durée de vie.

La présente invention a pour but de fournir une cellule électrochimique assurant une bonne étanchéité, en particulier au niveau de la membrane d'échange d'ions. Cette étanchéité est en effet cruciale pour le fonctionnement d'une batterie électrochimique car une fuite interne provoquerait un mélange des électrolytes et une perte rapide et irréversible de sa capacité. La présente invention a pour but d'éviter ces inconvénients.

La présente invention a pour but de fournir une cellule électrochimique présentant une distribution homogène des fluides électrochimiques.

La présente invention a également pour but de fournir une cellule électrochimique simple à monter et/ou à démonter.

La présente invention a également pour but de limiter les coûts de production d'un empilement ou stack de cellules électrochimiques, en particulier dans le domaine des cellules électrochimiques rédox en flux.

La complexité de ces problèmes techniques est en particulier lié au fait d'être capable de les résoudre tous ensemble, se propose de résoudre la présente invention.

La présente invention a pour but de résoudre l'ensemble ces problèmes techniques de manière fiable, industrielle et à faible coût.

### Description de l'invention

Pour résoudre les problèmes techniques, l'invention concerne un cadre d'une électrode poreuse de cellule électrochimique, ladite électrode étant destinée à être en contact avec une membrane.

La description est faite en référence aux figures à but purement illustratif qui ne saurait limiter la portée de l'invention.

L'invention concerne en particulier un cadre 10,50 d'une électrode poreuse 20,30 de cellule électrochimique, ladite électrode étant destinée à être en contact avec une membrane 40 perméable d'échange d'ions, dans lequel :
- le cadre 10,50 comprend une partie proximale 14,54 proche d'une membrane 40 perméable d'échange d'ions, et une partie distale 12,52 distante de la membrane 40,
- le cadre 10,50 comprend un canal alimentation 65,66 d'un fluide électrochimique et un canal d'entrée 60,61 d'un fluide alimentant une face latérale de l'électrode 20,30, le canal d'entrée 60,61 comprenant un orifice 62,63 dans la partie distale 12,52 débouchant sur une face latérale de l'électrode 20,30,
- le cadre 10,50 comprend un canal d'évacuation 85,86 d'un fluide électrochimique et un canal de sortie 80,81 du fluide par une face latérale de l'électrode 20,30, le canal de sortie 80,81 comprenant un orifice 82,83 dans la partie distale 12,52 débouchant sur une face latérale de l'électrode 20,30,
- au moins un, et de préférence l'ensemble, parmi le canal d'entrée 60,61 et le canal de sortie 80,81 comprend un orifice d'entrée 64,67, respectivement de sortie 84,87, débouchant sur un canal d'alimentation 65,66, respectivement d'évacuation 85,86, dans la partie proximale 14,54 du cadre 10.

L'invention concerne aussi une cellule électrochimique, et en particulier une cellule électrochimique 1 rédox en flux, comprenant au moins un cadre tel que défini précédemment, ladite cellule comprenant un cadre supérieur 10 logeant une première électrode 20 et un cadre inférieur 50 logeant une deuxième électrode 30, la première électrode 20 et la deuxième électrode 30 étant séparées entre-elles par une membrane 40, la première électrode 20 faisant face à la membrane 40 par sa face inférieure et la deuxième électrode 30 faisant face à la membrane 40 par sa face supérieure, le cadre supérieur 10 comprenant une partie proximale 14 de la membrane 40 et une partie distale 12 de la membrane 40, le cadre inférieur 50 comprenant une partie proximale 54 de la membrane 40 et une partie distale 52 de la membrane 40, dans laquelle :
- le cadre supérieur 10 comprend un canal alimentation 65 d'un premier fluide électrochimique et un canal d'entrée 60 du premier fluide alimentant une face latérale de la première électrode 20, le canal d'entrée 60 comprenant un orifice 62 dans la partie distale 12 du cadre supérieur 10 débouchant sur une face latérale de la première électrode 20,
- le cadre supérieur 10 comprend un canal d'évacuation 85 du premier fluide électrochimique et un canal de sortie 80 du premier fluide par une face latérale de l'électrode 20,30, le canal de sortie 80 comprenant un orifice 82 dans la partie distale 12 débouchant sur une face latérale de la première électrode 20,
- le cadre inférieur 50 comprend un canal alimentation 66 d'un deuxième fluide électrochimique et un canal d'entrée 61 du deuxième fluide alimentant une face latérale de la deuxième électrode 30, le canal d'entrée 61 comprenant un orifice 63 dans la partie distale 52 du cadre inférieur 50 débouchant sur une face latérale de la deuxième électrode 30,
- le cadre inférieur 50 comprend un canal d'évacuation 86 du deuxième fluide électrochimique et un canal de sortie 81 du deuxième fluide par une face latérale de la deuxième électrode 30, le canal de sortie 81 comprenant un orifice 83 dans la partie distale 52 débouchant sur une face latérale de la deuxième électrode 30,
- au moins un, et de préférence l'ensemble, parmi le canal d'entrée 60 et le canal de sortie 80 du cadre supérieur 10 et le canal d'entrée 61 et le canal de sortie 81 du cadre inférieur 50, comprend un orifice d'entrée 64,67, respectivement de sortie 84,87, débouchant sur le canal d'alimentation 65, respectivement d'évacuation 85, dans la partie proximale 14,54 du cadre 10,50.

L'invention concerne également un procédé de fabrication de telles cellules comprenant le positionnement d'une première électrode 20 dans un orifice de logement d'électrode 13 d'un cadre supérieur 10 tel que défini plus haut, le positionnement d'une deuxième électrode 30 dans un orifice de logement d'électrode 53 dans le cadre inférieur 50 tel que défini ci-dessus, le positionnement d'un joint d'étanchéité 15 dans un logement de joint 11 du cadre supérieur 10, le logement d'un joint d'étanchéité 55 dans un logement de joint 51 du cadre inférieur 50, le positionnement d'une membrane 40 en regard des joints d'étanchéité interne 15,55, le positionnement du cadre supérieur 10 en regard du cadre inférieur 50 en fermeture interne étanche de la membrane 40.

L'invention concerne encore une méthode comprenant la mise en œuvre d'une cellule électrochimique telle que définie selon la présente invention ou d'un empilement tel que défini selon la présente invention.

L'invention va être décrite plus précisément en relation avec les figures, sans limitation de la portée de l'invention.

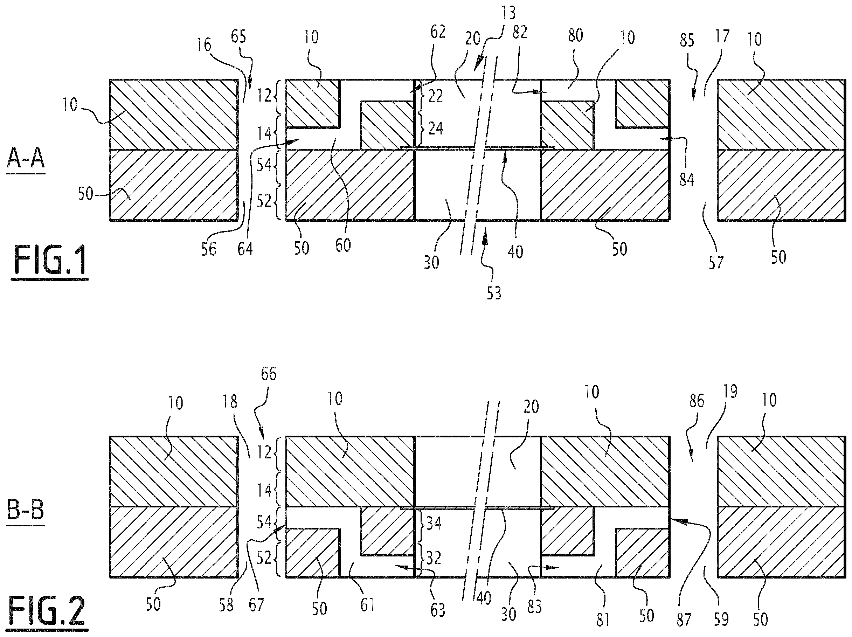

La figure 1 représente un schéma d'une section selon l'axe AA d'une cellule selon un mode de réalisation de la présente invention au niveau d'un canal d'alimentation 65 et d'évacuation 85 d'un fluide de la première électrode 20.
La figure 2 représente un schéma d'une section selon l'axe BB d'une cellule selon un mode de réalisation de la présente invention au niveau d'un canal d'alimentation 66 et d'évacuation 86 d'un fluide de la deuxième électrode 30.

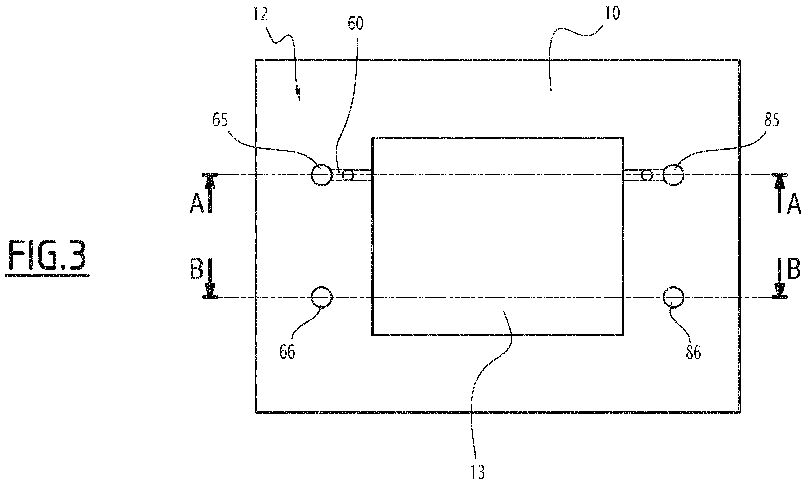

La figure 3 représente un schéma d'une vue de dessus d'un cadre selon un mode de réalisation de la présente invention et représentant axes de AA et BB des sections des figures 1 et 2.

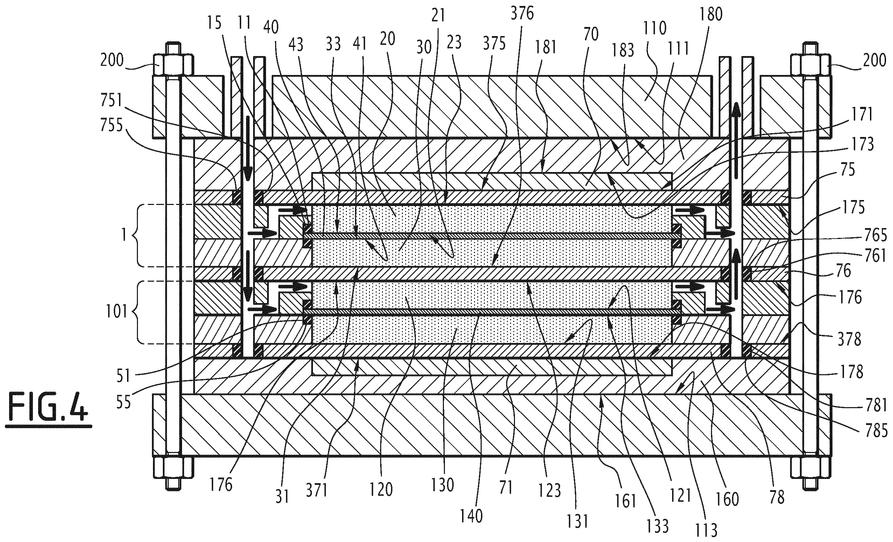

La figure 4 représente une section selon un plan passant par l'axe longitudinal du canal d'alimentation et l'axe longitudinal du canal d'évacuation en premier fluide électrochimique par un empilement (« stack ») selon un mode de réalisation de l'invention.
La figure 5 représente un schéma d'une vue de dessus d'un cadre avec un mode de répartition fluidique dans lequel les canaux d'alimentation et de sortie sont démultipliés pour répartir l'alimentation et l'évacuation du fluide sur les électrodes.

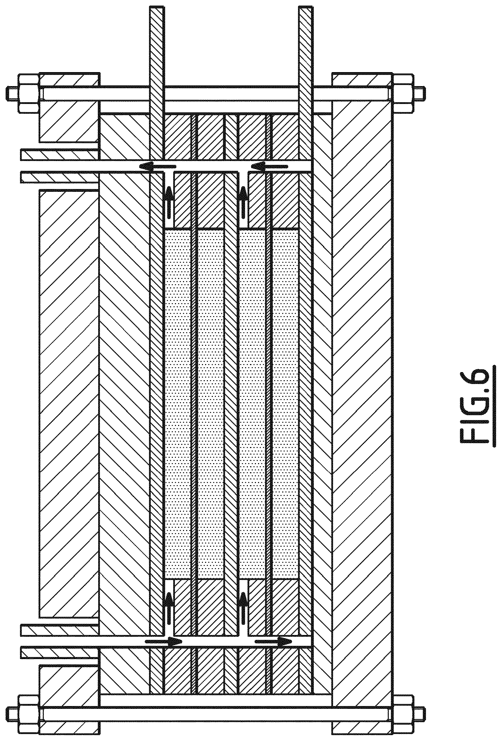

La figure 6 représente un schéma d'une section d'un empilement selon l'art antérieur.

Dans la présente invention il est fait référence indépendamment aux différents éléments par leur numéro de référence sur les figures, sans aucune limitation de la portée de l'invention. Les références à un élément avec plusieurs numéros de référence signifient que la description s'applique généralement à l'élément portant le signe auquel il est fait référence. Ainsi par exemple une référence à l'électrode 20,30 signifie que la description s'applique généralement et indépendamment à l'électrode 20 et à l'électrode 30.

Avantageusement, la première électrode 20 est destinée à recevoir un premier fluide électrochimique.

Avantageusement, la deuxième électrode 30 est destinée à recevoir un deuxième fluide électrochimique.

Le premier et le deuxième fluide électrochimique peuvent être identiques ou différents.

Le contact de l'électrode 20,30 avec la membrane 40 peut être direct ou indirect. Ainsi, selon un mode de réalisation, l'électrode 20,30 est en contact avec la membrane 40 sans élément intermédiaire. Selon un autre mode de réalisation, l'électrode 20,30 est en contact indirect avec la membrane 40, séparé par un élément intermédiaire.

Avantageusement, le cadre supérieur 10 comprend un logement 11 d'un joint d'étanchéité 15 et que le cadre inférieur 50 comprend un logement 51 d'un joint d'étanchéité 55, les joints d'étanchéité 15,55 étant en contact avec la membrane 40.

Typiquement, la première électrode 20 est en contact direct avec la membrane 40 et la deuxième électrode 30 est en contact direct avec la membrane 40. Ainsi, typiquement la membrane 40 est en contact par une surface avec la première électrode 20 et par une surface opposée avec la deuxième électrode 30.

Le cadre 10,50 comprend en général au moins un premier trou traversant 16,56 (respectivement) de préférence transversal, perpendiculaire à sa plus grande dimension, formant partie d'un premier canal d'alimentation 65 d'un premier fluide électrochimique.

Avantageusement, le cadre 10,50 comprend au moins un deuxième trou traversant 17,57 (respectivement) de préférence transversal, perpendiculaire à sa plus grande dimension, formant partie du premier canal d'évacuation 85 du premier fluide électrochimique, et en général disposé de manière opposée au premier canal d'alimentation 65.

Le cadre 10,50 comprend en général au moins un troisième trou traversant 18,58 (respectivement) de préférence transversal, perpendiculaire à sa plus grande dimension, formant partie d'un deuxième canal d'alimentation 66 d'un deuxième fluide électrochimique.

Avantageusement, le cadre 10,50 comprend au moins un quatrième trou traversant 19,59 (respectivement) de préférence transversal, perpendiculaire à sa plus grande dimension, formant partie d'un deuxième canal d'évacuation 86 du deuxième fluide électrochimique, et en général disposé de manière opposée au deuxième canal d'alimentation 66.

Selon une variante, le cadre 10 comprend plusieurs canaux alimentation 65,66 et d'évacuation 85,86 de fluides électrochimiques. Ces canaux sont connus de l'art antérieur et servent par exemple à alimenter en différents fluides électrochimiques les électrodes d'une cellule électrochimique.

Le premier canal d'alimentation 65 est destiné à alimenter en premier fluide électrochimique la première électrode 20. Le premier canal d'évacuation 85 est destiné à évacuer le premier fluide électrochimique de la première électrode 20.

Le deuxième canal d'alimentation 66 est destiné à alimenter en deuxième fluide électrochimique la deuxième électrode 30. Le deuxième canal d'évacuation 86 est destiné à évacuer le deuxième fluide électrochimique de la deuxième électrode 30.

Le canal 60 d'entrée du fluide débouchant sur la première électrode 20 est typiquement en communication fluide avec le canal d'alimentation 65 pour permettre l'alimentation en premier fluide électrochimique de la première électrode 20.

Le canal 80 de sortie du fluide débouchant sur la première électrode 20 est typiquement en communication fluidique avec le canal d'évacuation 85 pour permettre l'évacuation du premier fluide électrochimique de la première électrode 20.

Le deuxième canal 61 d'entrée du fluide débouchant sur la deuxième électrode 30 est typiquement en communication fluide avec le deuxième canal d'alimentation 66 pour permettre l'alimentation en deuxième fluide électrochimique de la deuxième électrode 30.

Le deuxième canal 81 de sortie du fluide débouchant sur la deuxième électrode 30 est typiquement en communication fluide avec le deuxième canal d'évacuation 86 pour permettre l'évacuation du deuxième fluide électrochimique de la deuxième électrode 30.

Avantageusement, les canaux d'entrée 60,61 et de sortie 80,81 ont une longueur assurant une résistance électrique suffisante pour limiter les courants de shunt. Les canaux d'entrée 60,61 et de sortie 80,81 ne doivent pas être trop long pour que la perte de charge ne soit pas trop importante. L'homme du métier cherche donc un compromis à cet égard. A titre d'exemple, les canaux d'entrée 60,61 et de sortie 80,81 ont une longueur de l'ordre de 1 à 500 millimètre.

L'orifice 62,63 dans la partie distale 12,52 débouche sur une partie distale 22,32 de la face latérale de l'électrode 20,30 et constitue un orifice de sortie d'alimentation du fluide du canal 60,61.

L'orifice 82,83 dans la partie distale 12,52 débouche sur une partie distale 22,32 de la face latérale de l'électrode 20,30 et constitue un orifice d'entrée d'évacuation du fluide du canal 80,81.

L'orifice 64,67 dans la partie proximale 14,54 débouche sur le canal d'alimentation 65,66 et constitue un orifice d'entrée d'alimentation du fluide du canal 60,61.

L'orifice 84,87 dans la partie proximale 14,54 débouche sur le canal d'évacuation 85,86 et constitue un orifice de sortie d'évacuation du fluide du canal 80,81.

Afin de diminuer la zone de contact entre le fluide électrochimique et la plaque intercalaire, qui peut provoquer un courant de shunt, le fluide électrochimique est envoyé dans le cadre 10,50 par la partie proximale 14,54 puis traverse le cadre 10,50 dans la partie distale 12,52 pour alimenter l'électrode 20,30. Selon une variante, le fluide électrochimique circulant dans la partie proximale est au moins en partie ou entièrement au contact avec les 2 cadres 10,50. Selon une variante, le fluide électrochimique circulant dans la partie distale est au moins en partie ou entièrement en contact avec le cadre et la plaque intercalaire. L'invention permet avantageusement de fonctionnaliser techniquement le ou les cadres 10,50 avec un conduit d'alimentation 60,61 et/ou d'évacuation 80,81 possédant une configuration limitant les courants de shunt (configuration partie proximale) et une configuration optimisant la distribution fluidique dans les cellules 20,30 (configuration partie distale).

La configuration permettant de limiter les courants de shunt selon la présente invention définit un canal de shunt. La longueur et la section du canal de shunt dépend de la conductivité des fluides électrochimiques et de l'empilement de cellule (donc de la tension du stack). Plus l'empilement est important, plus les courants de shunt sont forts, donc plus la résistance électrique entre cellules doit être augmentée. C'est-à-dire plus le canal de shunt doit être long et/ou plus la section du canal doit être petite. La contrepartie est une augmentation de la perte de charge du stack. Il y a donc un compromis à trouver entre minimiser les courants de shunt et minimiser la consommation des pompes. Il y a également un compromis à trouver sur le nombre maximal de cellules à empiler.

Selon un mode de réalisation, le cadre 10,50 comprend un système de distribution homogène du premier fluide électrochimique et/ou du deuxième fluide électrochimique respectivement dans la première électrode 20 et/ou la deuxième électrode 30.

Selon un mode de réalisation, au moins un, et de préférence l'ensemble, parmi l'orifice d'entrée 64 du canal d'alimentation 60, l'orifice de sortie 84 du canal d'évacuation 80 du cadre supérieur 10, l'orifice d'entrée 67 du canal d'alimentation 61, et l'orifice de sortie 87 du canal d'évacuation 81 du cadre inférieur 50, débouche sur la partie proximale 12,52 du cadre opposé 10,50.

Par « cadre opposé » on entend le cadre inférieur 50 en référence au cadre supérieur 10 et le cadre supérieur 10 en référence au cadre inférieur 50.

Ainsi, selon une variante, lorsque l'orifice dans le cadre débouche sur un cadre opposé, il se forme un produit par combinaison des deux cadres.

Avantageusement, les orifices d'entrée du canal d'alimentation et de sortie du canal d'évacuation débouche sur le cadre et forme ainsi une entrée de canal d'alimentation 60,61 et une sorties de canal d'évacuation 80,81 par combinaison des cadres supérieur 10 et inférieur 20.

Selon un mode de réalisation, au moins un, et de préférence l'ensemble, parmi l'orifice de sortie 62 du canal d'alimentation 60, l'orifice d'entrée 82 du canal d'évacuation 80 du cadre supérieur 10, l'orifice 63 du canal d'alimentation 61, et l'orifice d'entre 83 du canal d'évacuation 81 du cadre inférieur 50, débouche sur la surface d'une plaque intercalaire 70,76,78.

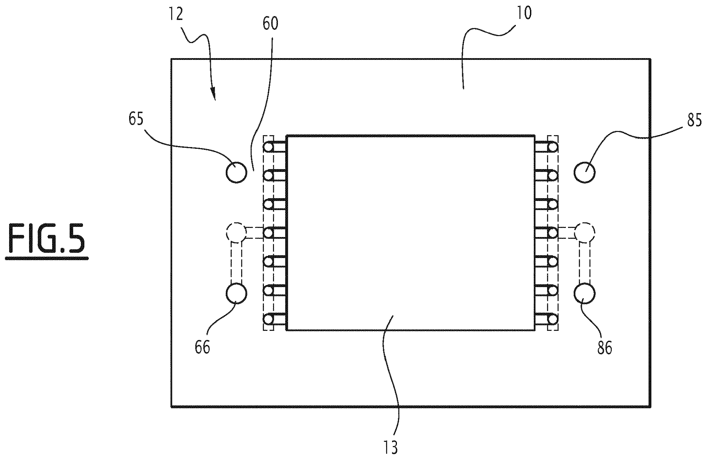

En référence à la figure 5, le canal d'alimentation 65,66 et/ou le canal d'évacuation 85,86 peuvent comprendre une déviation, par exemple sous la forme d'un coude, dans la partie proximale 14,54 permettant de déporter l'orifice d'alimentation et/ou de sortie, respectivement, de préférence vers le centre de la face latérale des électrodes 20,30 et déboucher dans la partie distale 12,52 sur une multitude de canaux d'alimentation et/ou de sortie, respectivement de manière à répartir de la manière la plus homogène le fluide alimentant sur la face latérale des électrodes 20,30, dans leur partie distale 22,32. De telles alimentations peuvent avoir une forme dite de râteau. Il est préféré que la longueur du canal dans la partie proximale 14,54 soit la plus longue possible car elle participe directement à augmenter la résistance électrique entre cellule donc augmente le shunt et celle dans la partie distale 12,52 la plus courte possible car elle ne participe pas au shunt.

Selon un mode de réalisation, le cadre supérieur 10 et le cadre inférieur 50 sont symétriques et interchangeables. Ainsi un même et unique cadre peut former à la fois le cadre supérieur 10 et le cadre inférieur 50 par simple retournement.

En général, les cadres sont en polymère thermoplastique, comme par exemple en poly(chlorure de vinyle) (PVC).

Un cadre est généralement moulé ou usiné et peut être aussi imprimé, par exemple par impression tridimensionnelle.

Selon un mode de réalisation, la première électrode 20, la deuxième électrode 30 et la membrane 40 sont maintenues en contact par pression.

Le contact par pression est un contact sur au moins une partie des électrodes. Du fait de leurs dimensions sensiblement identiques ou similaires, selon un mode de réalisation, la membrane 40, la première électrode 20 et la deuxième électrode 30 ont une aire sensiblement identique ou similaire, avec l'aire de la membrane ne tenant pas compte de la porosité de la membrane. Ainsi, avantageusement, la surface de contact est constituée par la surface de la deuxième électrode 30.

Selon un mode de réalisation, les cadres sont maintenus solidaires par pression de contact.

Le cadre supérieur 10 et le cadre inférieur 50 sont maintenus solidairement en contact.

Selon une variante avantageuse, le cadre supérieur 10 et le cadre inférieur 50 sont maintenus solidairement en contact par collage ou soudage. Par exemple on peut thermosceller la face inférieure du cadre supérieur 10 avec la face supérieure du cadre inférieur 50. Pour thermosceller les cadres ont peut utiliser un film polymère (par exemple poly(téréphtalate d'éthylène) (PET), poly(naphtalate d'éthylène) (PEN), Mylar®...). Un thermoscellage permet avantageusement de refermer le canal de shunt lorsqu'il débouche dans la partie proximale sur un cadre opposé et ainsi ajouter une résistance électrique supplémentaire au canal de shunt. La membrane 40 est avantageusement emprisonnée entre les deux cadres 10,50.

Selon un mode de réalisation, la membrane 40 est disposée en contact avec le cadre 10,50, et en particulier en contact au moins en un point avec le joint d'étanchéité 15,55.

La membrane 40 présente une surface supérieure 43 et une surface inférieure 41 43, la surface supérieure étant en contact avec la première électrode 20 et la surface inférieure 41 étant en contact avec la deuxième électrode 30.

Avantageusement, la membrane 40 présente une périphérie sensiblement identique ou similaire à la périphérie du ou des joints 15,55 d'étanchéité de membrane 40.

La périphérie de la membrane 40 peut être en contact avec le ou les joints d'étanchéité interne 15,55 de la membrane. Ainsi, la membrane peut présenter une dimension réduite ce qui optimise la surface active de la membrane par rapport à sa surface totale et diminue les coûts de production. Par exemple, la pression de maintien des électrodes en contact avec la membrane et éventuellement les autres éléments d'une cellule électrochimique permet de « pincer » la périphérie de la membrane 40 entre les joints d'étanchéité interne 15,55.

Par exemple la membrane est une membrane perméable d'échange d'ions. Par exemple, la membrane est une membrane d'échange d'ions (ou membrane échangeuse d'ions) comprenant un polymère organique, et de préférence un polymère organique halogéné, et encore de préférence un polymère fluoré. De tels polymères préférés sont connus et disponibles sur le marché comme par exemple le Nafion®.

Le joint d'étanchéité 15,55 permet d'éviter une fuite de fluide électrochimique provenant de la première électrode 20 vers la deuxième électrode 30, ou inversement, sans traverser la membrane 40. Ainsi, le joint d'étanchéité 15,55 évite le contournement fluidique de la membrane 40.

Le logement 11,51 de joint d'étanchéité 15,55 forme avantageusement une gorge de réception du joint 15,55 d'étanchéité.

Selon une variante, le logement 11,51 forme un évidement réalisé dans le cadre 10,50 apte à recevoir un joint d'étanchéité 15,55 de forme annulaire.

Le cadre 10,50 peut comprendre plusieurs logements 11,51 de joints 15,55.

Le joint 15,55 d'étanchéité assure l'étanchéité interne entre la membrane 40 et le cadre 10,50 respectivement afin d'éviter un écoulement fluide, du type fluide électrochimique, hors de la zone de contact de la membrane 40 avec les électrodes 20,30.

Le cadre 10,50 comprend avantageusement un ou plusieurs joints d'étanchéité, non représentés, assurant l'étanchéité externe de la circulation fluide dans le canal d'alimentation et/ou le canal d'évacuation au niveau de la partie distale 12,52 du cadre 10,50.

Le cadre 10,50 comprend avantageusement un ou plusieurs joints d'étanchéité, non représentés, assurant l'étanchéité externe de la circulation fluide dans le canal d'alimentation et/ou le canal d'évacuation au niveau de la partie proximale 14,54 du cadre 10,50.

Les joints assurant l'étanchéité interne évitent tout contact entre la zone anodique et la zone cathodique. Les joints assurant l'étanchéité externe évitent tout contact avec l'atmosphère ambiante et les fuites des fluides électrochimiques vers l'extérieur de la cellule.

Typiquement, l'électrode 20,30 est une électrode poreuse. Une telle électrode est destinée à recevoir un fluide électrochimique dans sa porosité.

Selon une variante, l'électrode poreuse est une électrode poreuse de carbone, typiquement constituée d'un feutre de carbone au feutre de graphite. On connait de telles électrodes dans le domaine des cellules électrochimiques rédox en flux. Typiquement une telle électrode d'un feutre de graphite présente une épaisseur de 3 à 12 mm lorsqu'elle n'est pas comprimée et de 2 à 6 mm lorsqu'elle est comprimée, assurant ainsi un bon contact électrique avec une plaque collectrice de courant.

Selon une variante, la première électrode 20 et la deuxième électrode 30 présentent une épaisseur sensiblement identique ou similaire.

Selon une variante, la première électrode 20 présente une largeur et/ou une longueur sensiblement identiques ou similaires à la largeur et/ou la longueur, respectivement, de la deuxième électrode 30.

Selon une variante, la première électrode 20 présente une surface sensiblement identique ou similaire à la surface de la deuxième électrode 30.

Selon une variante, la surface de la première électrode 20 et/ou de la deuxième électrode 30 est sensiblement identique ou similaire à la surface de la membrane 40.

Typiquement, la première électrode 20 est en contact avec le cadre supérieur 10 par ces bords extérieurs, de manière à être positionnée bord à bord dans le logement 13 du cadre supérieur 10.

Avantageusement, la première électrode 20 est en contact avec l'orifice 62 du canal 60 d'alimentation et l'orifice 82 du canal 80 d'évacuation.

Typiquement, la deuxième électrode 30 est en contact avec le cadre inférieur 50 par ces bords extérieurs, de manière à être positionnée bord à bord dans le logement 53 du cadre inférieur 50.

Avantageusement, la deuxième électrode 30 est en contact avec l'orifice 63 du canal 61 d'alimentation et l'orifice 83 du canal 81 d'évacuation

L'invention concerne également un empilement 100 de plusieurs cellules électrochimiques comprenant plusieurs cellules électrochimiques 1,101, telles que décrites selon l'invention, empilées.

Avantageusement, l'empilement des cadres et plaques intercalaires forme un canal.

De manière préférée, l'empilement des cellules électrochimiques, et en particulier l'empilement des premiers trous d'alimentation 16,56 et des deuxièmes trous d'évacuation 17,57 forme respectivement un premier canal d'alimentation 65 d'un premier fluide électrochimique et un premier canal d'évacuation 85 d'un premier fluide électrochimique, ledit premier fluide électrochimique étant contenu dans la première électrode 20. De manière préférée, l'empilement des cellules électrochimiques 1,101, et en particulier l'empilement des troisièmes trous d'alimentation 18,58 et des quatrièmes trous d'évacuation 19,59 forme respectivement un deuxième canal d'alimentation 66 d'un deuxième fluide électrochimique et un deuxième canal d'évacuation 86 d'un deuxième fluide électrochimique, ledit deuxième fluide électrochimique étant contenu dans la deuxième électrode 30.

Les canaux d'alimentation 65 et 66 et les canaux d'évacuation 85 et 86 peuvent être chacun indépendamment en communication fluidique avec des réservoirs de stockage ou de recharge respectivement d'un premier fluide électrochimie contenant par exemple un ou plusieurs électrolytes et d'un deuxième fluide électrochimie contenant par exemple un ou plusieurs électrolytes, les premiers et deuxièmes fluides électrochimiques pouvant contenir des espèces chimiques, et en particulier des électrolytes, identiques ou différentes.

Selon un mode de réalisation :
- la surface supérieure 23 de la première électrode 20 d'une première cellule électrochimique 1 est en contact avec la surface inférieure 175 d'une première plaque intercalaire 75, formant électrode réactive (où a lieu la réaction électrochimique) ;
- la surface inférieure 31 de la deuxième électrode 30 d'une première cellule électrochimique 1 est en contact avec la surface supérieure 376 d'une deuxième plaque intercalaire 76, formant électrode réactive (où a lieu la réaction électrochimique) ;
- la surface supérieure 123 de la première électrode 120 d'une deuxième cellule électrochimique 101 est en contact avec la surface inférieure 176 d'une deuxième plaque intercalaire 76 ;
- la surface inférieure 131 de la deuxième électrode 130 d'une deuxième cellule électrochimique 101 est en contact avec la surface supérieure 378 d'une dernière plaque intercalaire 78, formant électrode réactive (où a lieu la réaction électrochimique) ;
- la surface inférieure 178 de la dernière plaque intercalaire 78 et en contact avec la surface supérieure 363 d'une plaque formant réactive 71 (où a lieu la réaction électrochimique) ;
- la surface supérieure 375 de la première plaque intercalaire 75 et en contact avec la surface inférieure 171 d'une plaque collectrice de courant électrique 70.

Typiquement, la plaque d'alimentation 180 est en contact par sa surface inférieure 181 avec la surface supérieure 173 d'une première plaque collectrice 70 et par sa surface supérieure 183 avec la surface inférieure 111 d'une bride 110.

Typiquement, la plaque de fermeture 160 est en contact par sa surface inférieure 161 avec la surface supérieure 113 d'une bride 200.

Avantageusement, l'empilement forme une batterie rédox en flux (2).

Selon une variante, l'empilement comprend au moins deux cellules électrochimiques.

Selon une variante, l'empilement comprend au moins vingt cellules électrochimiques.

Selon une variante, l'empilement comprend au moins cinquante cellules électrochimiques.

Avantageusement, la cellule électrochimique de l'invention comprend une plaque 70 collectrice de courant en contact direct avec une électrode 20,30.

Typiquement, les plaques collectrices de courant sont constituées de ou comprennent un élément conducteur, comme par exemple un élément métallique, éventuellement sous forme alliée, et/ou un graphite ou un matériau composite comprenant du graphite. En général, il s'agit d'un élément bon conducteur, typiquement du cuivre.

Les plaques collectrices de courant intermédiaire 75,76,78 sont en général des plaques collectrices bipolaires.

Les plaques collectrices de courant intermédiaire 75,76,78 sont avantageusement isolé électriquement du fluide circulant dans les canaux d'alimentation et d'évacuation par des joints 751, 761, 781 disposés respectivement dans des gorges de joints 755,765,785.

La plaque d'alimentation 180 permet notamment d'amener les fluides au stack, et d'isoler électriquement la plaque 70 collectrice des brides de serrage 110 serrées avec des écrous 200 (métalliques) et permet avantageusement d'y noyer une plaque collectrice alimentant le courant du stack. La plaque de fermeture 160 a les mêmes fonctions en noyant une plaque 71 collectrice du courant du stack et referme les canaux fluidiques 65,66,85,86 du stack.

Par exemple, le maintien en contact des première 20 et deuxième 30 électrodes est assuré par une bride 110 de serrage du cadre.

Typiquement, une bride 110 de serrage maintient un empilement de cellules électrochimiques et de plaques collectrices de courant en compression.

La présente invention est applicable en particulier au domaine des cellules électrochimiques, et plus particulièrement concerne des cellules électrochimiques rédox en flux.

La présente invention concerne également des piles à combustible comprenant des cellules de l'invention. La présente invention concerne encore des cellules électrolytiques.

## Revendications

1. Cadre (10,50) d'une électrode poreuse (20,30) de cellule électrochimique, ladite électrode étant destinée à être en contact avec une membrane (40), ledit cadre (10) étant **caractérisé en ce que** :
- le cadre (10,50) comprend une partie proximale (14,54) proche d'une membrane (40), et une partie distale (12,52) distante de la membrane (40),
- le cadre (10,50) comprend un canal alimentation (65,66) d'un fluide électrochimique et un canal d'entrée (60,61) d'un fluide alimentant une face latérale de l'électrode (20,30), le canal d'entrée (60,61) comprenant un orifice (62,63) dans la partie distale (12,52) débouchant sur une face latérale de l'électrode (20,30),
- le cadre (10,50) comprend un canal d'évacuation (85,86) d'un fluide électrochimique et un canal de sortie (80,81) du fluide par une face latérale de l'électrode (20,30), le canal de sortie (80,81) comprenant un orifice (82,83) dans la partie distale (12,52) débouchant sur une face latérale de l'électrode (20,30),
- au moins un, et de préférence l'ensemble, parmi le canal d'entrée (60,61) et le canal de sortie (80,81) comprend un orifice d'entrée (64,67), respectivement de sortie (84,87), débouchant sur un canal d'alimentation (65,66), respectivement d'évacuation (85,86), dans la partie proximale (14,54) du cadre (10).

2. Cellule électrochimique (1) comprenant au moins un cadre selon la revendication 1, ladite cellule comprenant un cadre supérieur (10) logeant une première électrode (20) et un cadre inférieur (50) logeant une deuxième électrode (30), la première électrode (20) et la deuxième électrode (30) étant séparées entre-elles par une membrane (40), la première électrode (20) faisant face à la membrane (40) par sa face inférieure et la deuxième électrode (30) faisant face à la membrane (40) par sa face supérieure, le cadre supérieur (10) comprenant une partie proximale (14) de la membrane (40) et une partie distale (12) de la membrane (40), le cadre inférieur (50) comprenant une partie proximale (54) de la membrane (40) et une partie distale (52) de la membrane (40), ladite cellule électrochimique (1) étant **caractérisée en ce que** :
- le cadre supérieur (10) comprend un canal alimentation (65) d'un premier fluide électrochimique et un canal d'entrée (60) du premier fluide alimentant une face latérale de la première électrode (20), le canal d'entrée (60) comprenant un orifice (62) dans la partie distale (12) du cadre supérieur (10) débouchant sur une face latérale de la première électrode (20),
- le cadre supérieur (10) comprend un canal d'évacuation (85) du premier fluide électrochimique et un canal de sortie (80) du premier fluide par une face latérale de l'électrode (20,30), le canal de sortie (80) comprenant un orifice (82) dans la partie distale (12) débouchant sur une face latérale de la première électrode (20),
- le cadre inférieur (50) comprend un canal alimentation (66) d'un deuxième fluide électrochimique et un canal d'entrée (61) du deuxième fluide alimentant une face latérale de la deuxième électrode (30), le canal d'entrée (61) comprenant un orifice (63) dans la partie distale (52) du cadre inférieur (50) débouchant sur une face latérale de la deuxième électrode (30),
- le cadre inférieur (50) comprend un canal d'évacuation (86) du deuxième fluide électrochimique et un canal de sortie (81) du deuxième fluide par une face latérale de la deuxième électrode (30), le canal de sortie (81) comprenant un orifice (83) dans la partie distale (52) débouchant sur une face latérale de la deuxième électrode (30),
- au moins un, et de préférence l'ensemble, parmi le canal d'entrée (60) et le canal de sortie (80) du cadre supérieur (10) et le canal d'entrée (61) et le canal de sortie (81) du cadre inférieur (50), comprend un orifice d'entrée (64,67), respectivement de sortie (84,87), débouchant sur le canal d'alimentation (65), respectivement d'évacuation (85), dans la partie proximale (14,54) du cadre (10,50).

3. Cellule électrochimique (1) selon la revendication 2, **caractérisée en ce que** le cadre supérieur (10) comprend un logement (11) d'un joint d'étanchéité (15) et que le cadre inférieur (50) comprend un logement (51) d'un joint d'étanchéité (55), les joints d'étanchéité (15,55) étant en contact avec la membrane (40).

4. Cellule électrochimique (1) selon la revendication 2 ou 3, **caractérisée en ce que** le cadre (10,50) comprend un système de distribution homogène du premier fluide électrochimique et/ou du deuxième fluide électrochimique respectivement dans la première électrode (20) et/ou la deuxième électrode (30).

5. Cellule électrochimique (1) selon l'une quelconque des revendications 2 à 4, **caractérisée en ce qu'**au moins un, et de préférence l'ensemble, parmi l'orifice d'entrée (64) du canal d'alimentation (60), l'orifice de sortie (84) du canal d'évacuation (80) du cadre supérieur (10), l'orifice d'entrée (67) du canal d'alimentation (61), et l'orifice de sortie (87) du canal d'évacuation (81) du cadre inférieur (50), débouche sur la partie proximale (12,52) du cadre opposé (10,50).

6. Cellule électrochimique (1) selon l'une quelconque des revendications 2 à 5, **caractérisée en ce qu'**au moins un, et de préférence l'ensemble, parmi l'orifice de sortie (62) du canal d'alimentation (60), l'orifice d'entrée (82) du canal d'évacuation (80) du cadre supérieur (10), l'orifice (63) du canal d'alimentation (61), et l'orifice d'entre (83) du canal d'évacuation (81) du cadre inférieur (50), débouche sur la surface d'une plaque intercalaire (70,76,78).

7. Cellule électrochimique (1) selon l'une quelconque des revendications 2 à 6, **caractérisée en ce que** la membrane (40) présente une périphérie sensiblement identique ou similaire à la périphérie du ou des joints (15,55) d'étanchéité de membrane (40).

8. Empilement (100) de plusieurs cellules électrochimiques, **caractérisé en ce qu'**il comprend plusieurs cellules électrochimiques (1,101), définies selon l'une quelconque des revendications 2 à 7, empilées.

9. Méthode de production d'électricité comprenant la mise en œuvre d'une cellule électrochimique telle que définie selon l'une quelconque des revendications 2 à 7 ou d'un empilement tel que défini selon la revendication 8.

10. Procédé de fabrication d'une cellule électrochimique, **caractérisé en ce qu'**il comprend le positionnement d'une première électrode (20) dans un orifice de logement d'électrode (13) d'un cadre supérieur (10) tel que défini selon la revendication 1, le positionnement d'une deuxième électrode (30) dans un orifice de logement d'électrode (53) dans le cadre inférieur (50) tel que défini selon la revendication 1, le positionnement d'un joint d'étanchéité (15) dans un logement de joint (11) du cadre supérieur (10), le logement d'un joint d'étanchéité (55) dans un logement de joint (51) du cadre inférieur (50), le positionnement d'une membrane (40) en regard des joints d'étanchéité interne (15,55), le positionnement du cadre supérieur (10) en regard du cadre inférieur (50) en fermeture interne étanche de la membrane (40).

## Patentansprüche

1. Rahmen (10, 50) einer porösen Elektrode (20, 30) einer elektrochemischen Zelle, wobei die Elektrode dazu dient, in Kontakt mit einer Membran (40) zu sein, wobei der Rahmen (10) **dadurch gekennzeichnet ist, dass**:
- der Rahmen (10, 15) einen proximalen Abschnitt (14, 54) in der Nähe einer Membran (40) und einen distalen Abschnitt (12, 52) entfernt von der Membran (40) umfasst,
- der Rahmen (10, 50) einen Versorgungskanal (65, 66) für ein elektrochemisches Fluid und einen Eingangskanal (60, 61) eines Fluids, das eine Seitenfläche der Elektrode (20, 30) versorgt, umfasst, wobei der Eingangskanal (60, 61) eine Öffnung (62, 63) in dem distalen Abschnitt (12, 52) aufweist, der an einer Seitenfläche der Elektrode (20, 30) mündet,
- der Rahmen (10, 50) einen Abführkanal (85, 86) eines elektrochemischen Fluids und einen Ausgangskanal (80, 81) des Fluids durch eine Seitenfläche der Elektrode (20, 30) umfasst, wobei der Ausgangskanal (80, 81) eine Öffnung (82, 83) in dem distalen Abschnitt (12, 52) aufweist, der an einer Seitenfläche der Elektrode (20, 30) mündet,
- mindestens ein Kanal, vorzugsweise die Gesamtheit, des Eingangskanals (60, 61) und des Ausgangskanals (80, 81) eine Eingangsöffnung (64, 67), respektive eine Ausgangsöffnung (84, 87), umfasst, die in einen Versorgungskanal (65, 66), respektive Abführkanal (85, 86), in dem proximalen Abschnitt (14, 54) des Rahmens (10) mündet.

2. Elektrochemisches Zelle (1), mindestens einen Rahmen nach Anspruch 1 umfassend, wobei die Zelle einen oberen Rahmen (10), der eine erste Elektrode (20) aufnimmt, und einen unteren Rahmen (50), der eine zweite Elektrode (30) aufnimmt, umfasst, wobei die erste Elektrode (20) und die zweite Elektrode (30) voneinander durch eine Membran (40) getrennt sind, die erste Elektrode (20) mit ihrer unteren Fläche der Membran (40) gegenübersteht und die zweite Elektrode (30) mit ihrer oberen Fläche der Membran (40) gegenübersteht, der obere Rahmen (10) einen proximalen Abschnitt (14) der Membran (40) und einen distalen Abschnitt (12) der Membran (40) umfasst und der untere Rahmen (50) einen proximalen Abschnitt (54) der Membran (40) und einen distalen Abschnitt (52) der Membran (40) umfasst, wobei die elektrochemische Zelle (1) **dadurch gekennzeichnet ist, dass**:
- der obere Rahmen (10) einen Versorgungskanal (65) eines ersten elektrochemischen Fluids und einen Eingangskanal (60) des ersten Fluids, das eine Seitenfläche der ersten Elektrode (20) versorgt, umfasst, wobei der Eingangskanal (60) eine Öffnung (62) in dem distalen Abschnitt (12) des oberen Rahmens (10) aufweist, der an einer Seitenfläche der ersten Elektrode (20) mündet,
- der obere Rahmen (10) einen Abführkanal (85) des ersten elektrochemischen Fluids und einen Ausgangskanal (80) des ersten Fluids durch eine Seitenfläche der Elektrode (20, 30) umfasst, wobei der Ausgangskanal (80) eine Öffnung (82) in dem distalen Abschnitt (12) aufweist, der an einer Seitenfläche der ersten Elektrode (20) mündet,
- der untere Rahmen (50) einen Versorgungskanal (66) eines zweiten elektrochemischen Fluids und einen Eingangskanal (61) des zweiten Fluids, das eine Seitenfläche der zweiten Elektrode (30) versorgt, umfasst, wobei der Eingangskanal (61) eine Öffnung (63) in dem distalen Abschnitt (52) des unteren Rahmens (50) aufweist, der an einer Seitenfläche der zweiten Elektrode (20) mündet,
- der untere Rahmen (50) einen Abführkanal (86) des zweiten elektrochemischen Fluids und einen Ausgangskanal (81) des zweiten Fluids durch eine Seitenfläche der zweiten Elektrode (30) umfasst, wobei der Ausgangskanal (81) eine Öffnung (83) in dem distalen Abschnitt (52) aufweist, der an einer Seitenfläche der zweiten Elektrode (30) mündet,
- mindestens ein Kanal des Eingangskanals (60) und des Ausgangskanals (80), vorzugsweise die Gesamtheit, des oberen Rahmens (10) und der Eingangskanal (61) und der Ausgangskanal (81) des unteren Rahmens (50) eine Eingangsöffnung (64, 67), respektive eine Ausgangsöffnung (84, 87), umfasst, die in den Versorgungskanal (65), respektive Abführkanal (85), in dem proximalen Abschnitt (14, 54) des Rahmens (10, 50) mündet.

3. Elektrochemische Zelle (1) nach Anspruch 2, **dadurch gekennzeichnet, dass** der obere Rahmen (10) einen Raum (11) zur Aufnahme einer Dichtung (15) umfasst und dass der untere Rahmen (50) einen Raum (51) zur Aufnahme einer Dichtung (55) umfasst, wobei die Dichtungen (15, 55) in Kontakt mit der Membran (40) sind.

4. Elektrochemische Zelle (1) nach Anspruch 2 oder 3, **dadurch gekennzeichnet, dass** der Rahmen (10, 50) ein System zur homogenen Verteilung des ersten elektrochemischen Fluids und/oder des zweiten elektrochemischen Fluids jeweils in der ersten Elektrode (20) und/oder der zweiten Elektrode (30) umfasst.

5. Elektrochemische Zelle (1) nach einem beliebigen der Ansprüche 2 bis 4, **dadurch gekennzeichnet, dass** mindestens eine Öffnung, vorzugsweise die Gesamtheit, der Eingangsöffnung (64) des Versorgungkanals (60), der Ausgangsöffnung (84) des Abführkanals (80) des oberen Rahmens (10), der Eingangsöffnung (67) des Versorgungskanals (61) und der Ausgangsöffnung (87) des Abführkanals (81) des unteren Rahmens (50), an dem proximalen Abschnitt (12, 52) des gegenüberliegenden Rahmens (10, 50) mündet.

6. Elektrochemische Zelle (1) nach einem beliebigen der Ansprüche 2 bis 5, **dadurch gekennzeichnet, dass** mindestens eine Öffnung, vorzugsweise die Gesamtheit, der Auslassöffnung (62) des Versorgungkanals (60), der Eingangsöffnung (82) des Abführkanals (80) des oberen Rahmens (10), der Öffnung (63) des Versorgungskanals (61) und der Eingangsöffnung (83) des Abführkanals (81) des unteren Rahmens (50) an der Fläche einer Zwischenplatte (70, 76, 78) mündet.

7. Elektrochemische Zelle (1) nach einem beliebigen der Ansprüche 2 bis 6, **dadurch gekennzeichnet, dass** die Membran (40) einen im Wesentlichen identischen oder ähnlichen Umfang wie der Umfang des oder der Dichtungen (15, 55) der Membran (40) aufweist.

8. Stapelanordnung (100) von mehreren elektrochemischen Zellen, **dadurch gekennzeichnet, dass** sie mehrere gestapelte elektrochemische Zellen (1, 101), definiert nach einem beliebigen der Ansprüche 2 bis 7, umfasst.

9. Verfahren zur Erzeugung von Strom, das die Umsetzung einer elektrochemischen Zelle, wie sie nach einem der Ansprüche 2 bis 7 definiert ist, oder einer Stapelanordnung, wie sie nach dem Anspruch 8 definiert ist, umfasst.

10. Verfahren zur Herstellung einer elektrochemischen Zelle, **dadurch gekennzeichnet, dass** es die Positionierung einer ersten Elektrode (20) in einer Elektrodenaufnahmeöffnung (13) eines oberen Rahmens (10), wie nach Anspruch 1 definiert, die Positionierung einer zweiten Elektrode (30) in einer Elektrodenaufnahmeöffnung in dem unteren Rahmen (50), wie nach Anspruch 1 definiert, die Positionierung einer Dichtung (15) in einer Dichtungsaufnahme (11) des oberen Rahmens (10), die Unterbringung einer Dichtung (55) in einer Dichtungsaufnahme (51) des unteren Rahmens (50), die Positionierung einer Membran (50) gegenüber der inneren Dichtungen (15, 55), die Positionierung des oberen Rahmens (10) gegenüber dem unteren Rahmen (50) zum dichten inneren Verschließen der Membran, umfasst.

## Claims

1. A frame (10, 50) of a porous electrochemical cell electrode (20, 30), said electrode being intended to make contact with a membrane (40), said frame (10) being **characterized in that**:
- the frame (10, 50) comprises a proximal portion (14, 54) close to a membrane (40), and a distal portion (12, 52) distant from the membrane (40)
- the frame (10, 50) comprises a supply channel (65, 66) for supplying an electrochemical fluid and an inlet channel (60, 61) for a fluid supplying a lateral face of the electrode (20, 30), the inlet channel (60, 61) comprising an orifice (62, 63) in the distal portion (12, 52) opening onto a lateral face of the electrode (20, 30),
- the frame (10, 50) comprises a discharge channel (85, 86) for discharging an electrochemical fluid and an outlet channel (80, 81) through which the fluid exits via a lateral face of the electrode (20, 30), the outlet channel (80, 81) comprising an orifice (82, 83) in the distal portion (12, 52) opening onto a lateral face of the electrode (20, 30),
- at least one, and preferably both, of the inlet channel (60, 61) and outlet channel (80, 81) comprises an inlet orifice (64, 67) or outlet orifice (84, 87), respectively, opening onto a supply channel (65, 66) or discharge channel (85, 86), respectively, in the proximal portion (14, 54) of the frame (10).

2. An electrochemical cell (1) comprising at least one frame according to claim 1, said cell comprising an upper frame (10) housing a first electrode (20) and a lower frame (50) housing a second electrode (30), the first electrode (20) and the second electrode (30) being separated from one another by a membrane (40), the first electrode (20) facing the membrane (40) by its lower face and the second electrode (30) facing the membrane (40) by its upper face, the upper frame (10) comprising a proximal portion (14) of the membrane (40) and a distal portion (12) of the membrane (40), the lower frame (50) comprising a proximal portion (54) of the membrane (40) and a distal portion (52) of the membrane (40), said electrochemical cell (1) being **characterized in that**:
- the upper frame (10) comprises a supply channel (65) for supplying a first electrochemical fluid and an inlet channel (60) for the first fluid supplying a lateral face of the first electrode (20), the inlet channel (60) comprising an orifice (62) in the distal portion (12) of the upper frame (10) opening onto a lateral face of the first electrode (20),
- the upper frame (10) comprises a discharge channel (85) for discharging the first electrochemical fluid and a discharge channel (80) for discharging the first fluid through a lateral face of the electrode (20, 30), the discharge channel (80) comprising an orifice (82) in the distal portion (12) opening onto a lateral face of the first electrode (20),
- the lower frame (50) comprises a supply channel (66) for supplying a second electrochemical fluid and an inlet channel (61) for the second fluid supplying a lateral face of the second electrode (30), the inlet channel (61) comprising an orifice (63) in the distal portion (52) of the lower frame (50) opening onto a lateral face of the second electrode (30),
- the lower frame (50) comprises a discharge channel (86) for discharging the second electrochemical fluid and a discharge channel (81) for discharging the second fluid through a lateral face of the second electrode (30), the discharge channel (81) comprising an orifice (83) in the distal portion (52) opening onto a lateral face of the second electrode (30),
- at least one, and preferably both, of the inlet channel (60) and outlet channel (80) of the upper frame (10) and the inlet channel (61) and the outlet channel (81) of the lower frame (50), comprises an inlet orifice (64, 67), respectively outlet orifice (84, 87), respectively, opening onto the supply channel (65), respectively discharge channel (85), in the proximal portion (14, 54) of the frame (10, 50).

3. The electrochemical cell (1) according to claim 2, **characterized in that** the upper frame (10) comprises a housing (11) for a sealing gasket (15) and the lower frame (50) comprises a housing (51) for a sealing gasket (55), the sealing gaskets (15, 55) being in contact with the membrane (40).

4. The electrochemical cell (1) according to claim 2 or 3, **characterized in that** the frame (10, 50) comprises a homogeneous distribution system for the first electrochemical fluid and/or the second electrochemical fluid respectively in the first electrode (20) and/or the second electrode (30).

5. The electrochemical cell (1) according to any one of claims 2 to 4, **characterized in that** at least one, and preferably all, of the inlet orifice (64) of the supply channel (60), the outlet orifice (84) of the discharge channel (80) of the upper frame (10), the inlet orifice (67) of the supply channel (61), and the outlet orifice (87) of the discharge channel (81) of the lower frame (50), emerge(s) on the proximal portion (12, 52) of the opposite frame (10, 50).

6. The electrochemical cell (1) according to any one of claims 2 to 5, **characterized in that** at least one, and preferably all, of the outlet orifice (62) of the supply channel (60), the inlet orifice (82) of the discharge channel (80) of the upper frame (10), the orifice (63) of the supply channel (61), and the inlet orifice (83) of the discharge channel (81) of the lower frame (50), emerge(s) on the surface of an intercalary plate (70, 76, 78).

7. The electrochemical cell (1) according to any one of claims 2 to 6, **characterized in that** the membrane (40) has a periphery substantially identical or similar to the periphery of the membrane (40) sealing gasket(s) (15, 55).

8. A stack (100) of several electrochemical cells, **characterized in that** it comprises several electrochemical cells (1, 101), defined according to any one of claims 2 to 7, stacked.

9. A method for producing electricity, comprising the implementation of an electrochemical cell as defined according to any one of claims 2 to 7 or a stack as defined according to claim 8.

10. A method for making an electrochemical cell, **characterized in that** it comprises positioning a first electrode (20) in an orifice housing an electrode (13) of an upper frame (10) as defined according to claim 1, positioning a second electrode (30) in an orifice housing an electrode (53) in the lower frame (50) as defined according to claim 1, positioning a sealing gasket (15) in a gasket housing (11) of the upper frame (10), positioning a sealing gasket (55) in a gasket housing (51) of the lower frame (50), positioning a membrane (40) opposite the inner sealing gaskets (15, 55), positioning the upper frame (10) opposite the lower frame (50) in inner sealed closing of the membrane (40).
